# EUROPEAN PATENT SPECIFICATION

(11) **EP 1 611 009 B1**
(45) Date of publication and mention of the grant of the patent: **27.12.2006**
(21) Application number: 04726539.2
(22) Date of filing: 08.04.2004
(51) Int. Cl.: B64F 1/00

(54) **DOCKING GUIDANCE**
ANDOCKUNGSFÜHRUNGSANLAGE
GUIDAGE POUR STATIONNEMENT

(30) Priority: 09.04.2003 GB 0308184
(43) Date of publication of application: 04.01.2006
(73) Proprietor: Airfield Signs and Markings Limited, Marlow, Buckinghamshire SL7 3ND (GB)
(72) Inventor: HARVISON, Eric, Joseph, Marlow, Buckinghamshire SL7 2DF (GB); SAMES, David, William, High Wycombe, Buckinghamshire HP14 3NG (GB)
(74) Representative: Coles, Graham Frederick
(86) International application number: PCT/GB2004/001524
(87) International publication number: WO 2004/089749

(56) References cited:
- US-A- 3 729 262
- US-A- 4 015 235
- US-A- 5 889 479
- "TARMAC PUTS PILOTS ON THE RIGHT ROAD" FLIGHT INTERNATIONAL, REED BUSINESS INFORMATION, HAYWARDS HEATH, GB, vol. 153, no. 4607, 7 January 1998 (1998-01-07), page 20, XP000726369 ISSN: 0015-3710

## Description

This invention relates to methods and apparatus for affording docking guidance for aircraft and other vehicles.

Document US 4 015 235 shows such a prior art guidance apparatus, wherein a horizontal indicator (10) fixed relative to the docking station is viewed along an inclined line of sight from the vehicle against the background of a vertical target (2), said target having equal upper and lower areas of different colours separated by a white stripe (5).

According to one aspect of the present invention there is provided a method for affording guidance in bringing an aircraft or other vehicle to a defined position in a docking station, wherein a horizontal indicator fixed relative to the docking station is viewed along an inclined line of sight from the vehicle against the background of a vertical array of a multiplicity of horizontal rows of light sources spaced at a distance behind the horizontal indicator, the light sources being energized selectively by row to emit light that defines a horizontal datum in the array, manoeuvre of the vehicle towards the docking station reducing visually the vertical separation between the horizontal indicator and the horizontal datum until they are visually aligned with one another when the vehicle is located in said defined position in the docking station.

According to another aspect of the invention there is provided an apparatus for affording guidance in bringing an aircraft or other vehicle to a defined position in a docking station, comprising a horizontal indicator fixed relative to the docking station, a vertical array of a multiplicity of horizontal rows of light sources which is spaced at a distance behind the horizontal indicator, and means for energising the light sources selectively by row to emit light that defines a horizontal datum in the array, such that when the horizontal indicator is viewed along an inclined line of sight from the vehicle, manoeuvre of the vehicle towards the docking station reduces visually the vertical separation between the horizontal indicator and the horizontal datum until they are visually aligned with one another when the vehicle is located in said defined position in the docking station.

The method and apparatus of the present invention may be used for affording guidance to the pilot of an aircraft in achieving correct positioning of the aircraft in docking within an aircraft-stand of an airport terminal. In this respect, the method and apparatus may be applied for example to stopping the aircraft in the correct location relative to a passenger bridge of the docking station. The horizontal indicator, especially where an aircraft is involved, will normally be located above eye-level so that the line of sight is inclined upwardly to it.

Furthermore, the method and apparatus of the invention as well as affording guidance in stopping an aircraft appropriately in its docking station may afford guidance in alignment of the aircraft within the station; for example, guidance may be afforded for manoeuvring the aircraft into alignment with the centre-line of the aircraft-stand. More especially, and in the more general context, the method and apparatus may involve a vertical indicator located with the horizontal indicator and the background may then include a vertical datum that is spaced at said distance behind the horizontal and vertical indicators such that when the vertical and horizontal indicators are viewed along the inclined line of sight against the vertical and horizontal datums of the background, manoeuvre of the vehicle towards and in alignment with the docking station reduces visually both the vertical separation between the horizontal indicator and the horizontal datum as aforesaid, and the horizontal separation between the vertical indicator and the vertical datum.

Methods and indicator-apparatus according to the present invention for affording guidance to the pilot of an aircraft in achieving correct positioning of the aircraft in docking within an aircraft-stand of an airport terminal, will now be described by way of example, with reference to the accompanying drawings, in which:
Figure 1 is a perspective view of indicator-apparatus according to the invention;
Figures 2 to 6 are illustrative of respective indications provided by the indicator-apparatus of Figure 1 in affording guidance to the pilot of the aircraft during different stages of docking the aircraft;
Figures 7 and 8 are, respectively, a front elevation and a plan illustrating an array of a modified form of the indicator-apparatus of Figure 1; and
Figure 9 is a view of part of the array of Figures 7 and 8.

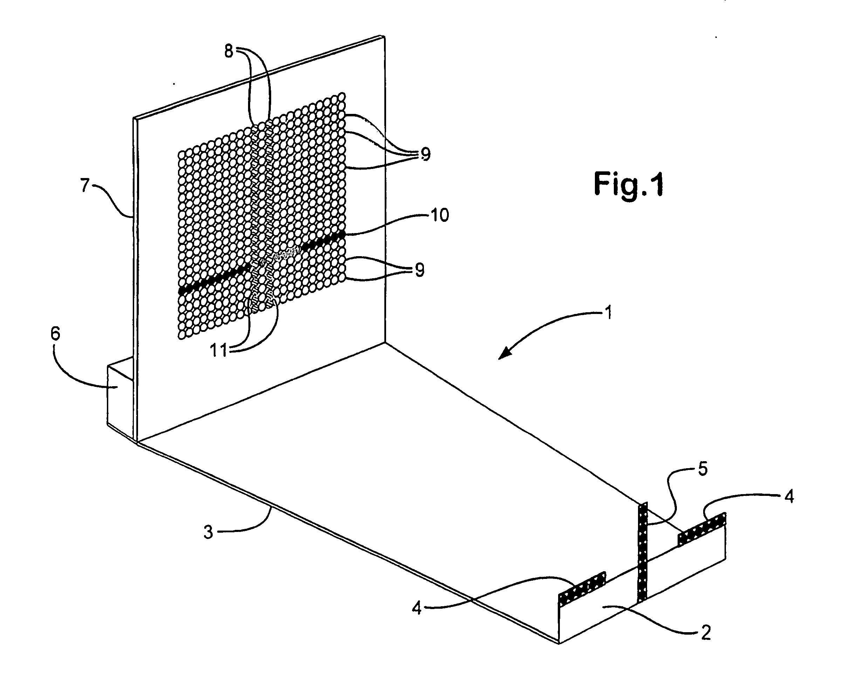

Referring to Figure 1, the indicator-apparatus 1 is contained within a weatherproof frame (not shown) that is mounted, for example on the airport-terminal building or on a stanchion, a short distance beyond the docking station on the centre-line to the aircraft stand. An upstanding front-lip 2 of a horizontal base-panel 3 of the apparatus 1 supports two spaced but horizontally-aligned indicator-bars 4 and a vertical indicator bar 5. The bar 5 extends upwardly through the gap midway between the bars 4 to project above them.

The two indicator-bars 4 and the indicator-bar 5 are formed, respectively, by two rows and a column of amber light-emitting diodes (LEDs) that are energised from an electronic-control box 6. The control box 6 also serves to energise a square array of LEDs mounted in columns and rows on an upstanding back-plane 7 of the base-panel 3 (cable connections from the box 6 to the LEDs are not shown). The array includes two vertical, closely-spaced columns 8 of green LEDs which bisect a multiplicity of horizontal rows 9 of amber LEDs that form the remainder of the array and are mounted one above the other on the back-plane 7. Only one of the rows 9 of amber LEDs is energised from the box 6 to be ON at any one time so as to provide a single horizontal datum-bar 10. Furthermore, only such part of each column 8 of green LEDs that lies below the energised row 9 is energised from the box 6 to be ON so as to establish green indicator-bars 11 extending up to the amber, datum-bar 10. (For the purpose of illustration, amber LEDs are represented in the drawings by circles with centres that are open when the LED is OFF but blocked in when ON, whereas the green LEDs are represented as circles with light cross-hatching when OFF and with heavier cross-hatching when ON.)

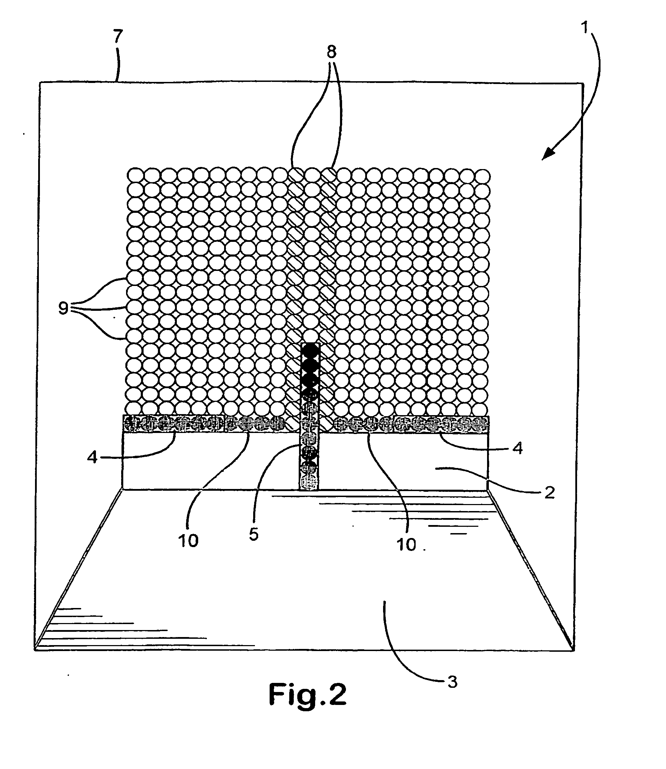

With the indicator-apparatus 1 mounted slightly above the pilot's eye-level, he/she views the amber bars 4 and 5 along an inclined line of sight from the aircraft. The bars 4 and 5 are viewed against the background of the back-plane 7 and the aircraft is manoeuvred with the object of bringing about the visual condition illustrated by Figure 2. More particularly, the objective is to so align the aircraft that in the pilot's view the vertical bar 5 is located centrally between the green bars 11, and to advance the aircraft until the horizontal bars 4 move upwardly in that view, into alignment with the bar 10. When this objective is achieved, the aircraft has the correct alignment and is in the correct stopping position on its stand for docking. The apparatus 1 affords guidance to the pilot in bringing about the visual condition represented in Figure 2 and thereby obtaining precision in manoeuvring the aircraft to the docking station.

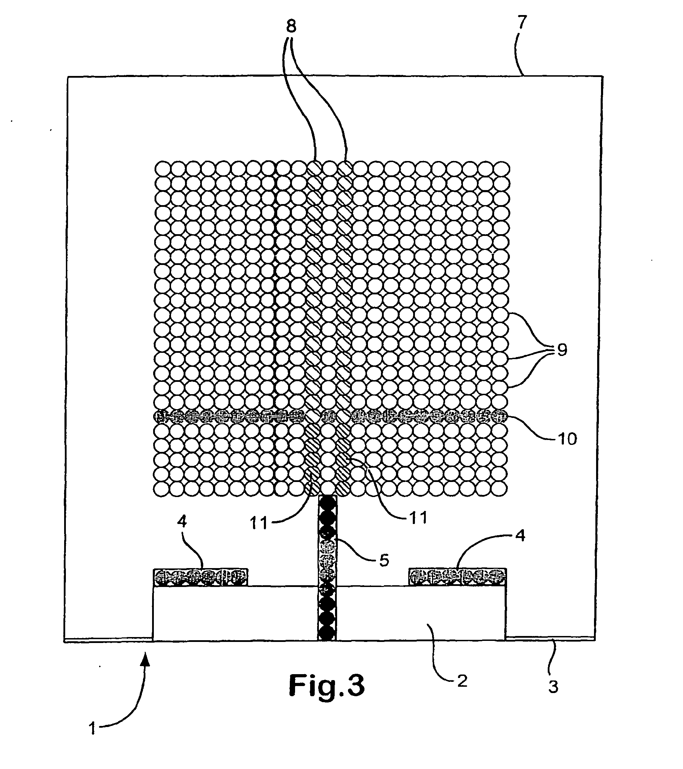

As the aircraft is manoeuvred towards the docking station, the pilot sees, by virtue of change of his/her viewpoint, an apparent movement of the bars 4 and 5 relative to the bars 10 and 11 respectively. Movement of the aircraft in azimuth varies visually the horizontal separation of the vertical bar 5 from the bars 11 such that the bar 5 is seen to lie in the gap between the bars 11 as illustrated in Figure 3, only when the aircraft is on track along the centre-line to the docking station.
In the situation illustrated in Figure 3, the aircraft is on track, but, as indicated by the vertical separation of the bars 4 from the bar 10, is still some distance (for example 20 m) from the appropriate stopping position of the docking station.

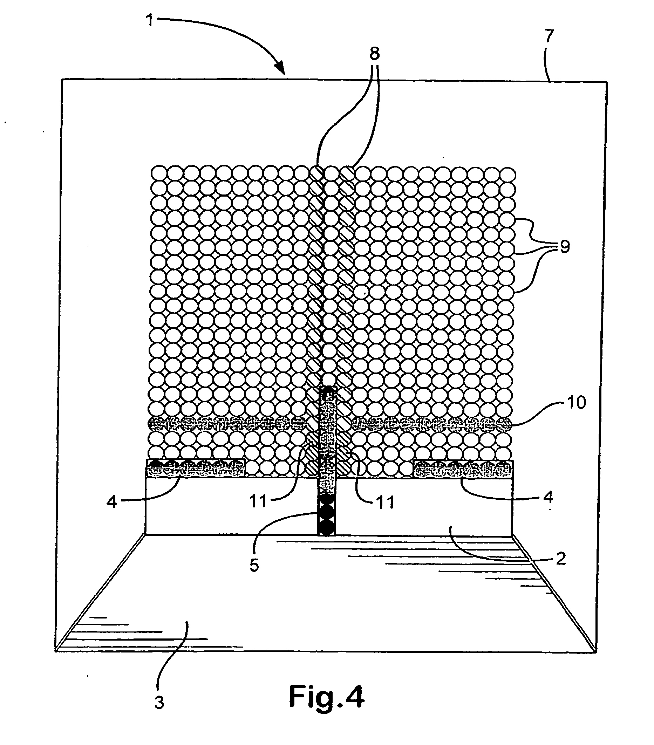

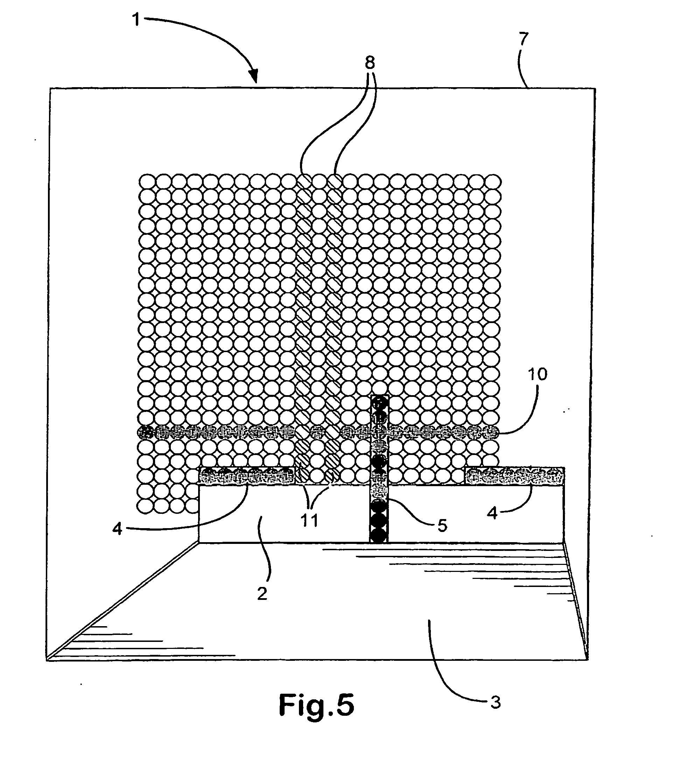

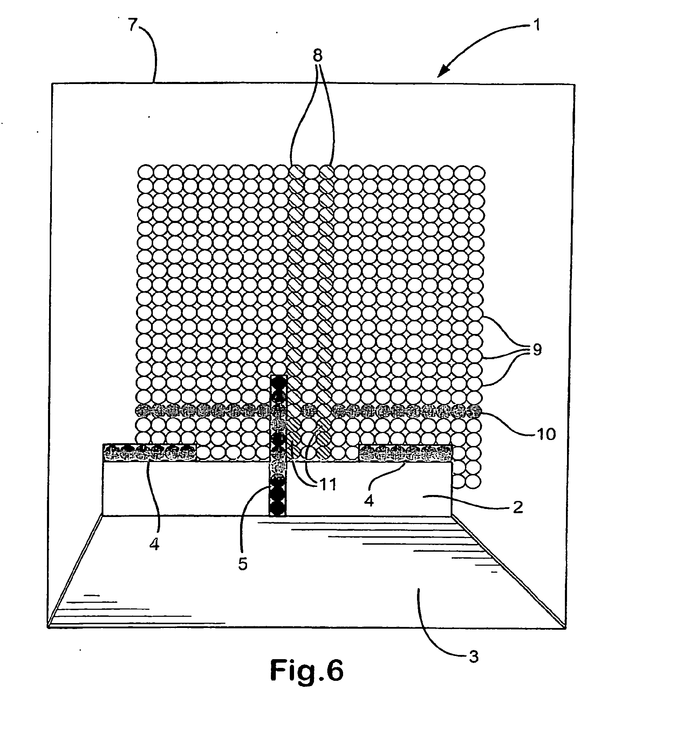

Movement of the aircraft towards the docking station while still maintaining its centre-line track, causes the bars 4 to appear by parallax, to ascend towards the bar 10 so that in consequence of the reduction of the distance to the stopping position (for example to 10 m), the pilot's view becomes as illustrated in Figure 4. If in the same circumstances, the aircraft were to be to the left (for example 0.5 m) of the centre-line, the pilot's view would be as illustrated in Figure 5, whereas if it were half as much to the right (for example by 0.25 m) his/her view would be as illustrated in Figure 6.

As the aircraft advances towards the docking station, and the bars 4 in consequence appears to ascend progressively towards the bar 10, the pilot steers the aircraft to reduce any visual separation of the bar 5 horizontally from the central location between the bars 11. With any deviation to left or right from the centre-line corrected, and the aircraft advanced to bring the bars 4 up onto the bar 10 as illustrated in Figure 2, the aircraft is brought to a halt. As the aircraft closes on the stopping position, the horizontal panel 3 progressively obscures the green bars 11 so that the pilot is given an analogue display of the rate of closure.

Because manoeuvring of larger aircraft is normally carried out by the captain seated offset to the left of the fore-aft axis of the aircraft, the indicator-apparatus 1 for such aircraft will be mounted with an alignment between the bars 5 and 11 that has the corresponding offset to the left of the centre-line to the docking station. Where the second pilot seated offset to the right of the fore-aft axis, may also manoeuvre the aircraft, or both pilots are to be kept informed of progress throughout manoeuvring, this is readily and economically facilitated by addition of a second indicator-apparatus 1 mounted with the appropriate offset to the right of the centre-line. The second indicator-apparatus 1 may be energised and controlled from the same control box 6 as the first.

The control box 6 incorporates a facility that varies which of the rows 9 of amber LEDs is energised at any one time in dependence upon the type of aircraft involved in docking. The selection of which row 9 is energised to provide the datum-bar 10 is carried out automatically in accordance with data from aircraft-recognition equipment or the airport ground-control centre, or simply manually by ground-crew at the docking station. A table relating aircraft-type to appropriate stopping position within the docking station and taking into account the height of pilot eye-level in the aircraft type, is programmed into the box 6 together with relationships between the individual rows 9 and the stopping positions they realise according to eye-level height. From the table and these relationships, the box 6 determines which of the rows 9, and consequently which of the green LEDs of the columns 8, are to be energised to provide the appropriate horizontal datum-bar 10 and the vertical bars 11 to it, for the aircraft concerned. The brilliance of the energised LEDs providing the bar 10, and also of the LEDs providing the other bars 4, 5 and 11, is controlled from the box 6 according to weather and daylight conditions.

The apparatus of the present invention has the particular advantage that it avoids the use of complex optical systems and electronic equipment, and that it has reliability and economic benefits not enjoyed by prior proposals for docking guidance. Moreover, guidance is provided positively in a clear representational manner directly in front of the aircraft and without the need for the pilot or pilots to turn their heads away from the forward view to the docking station.

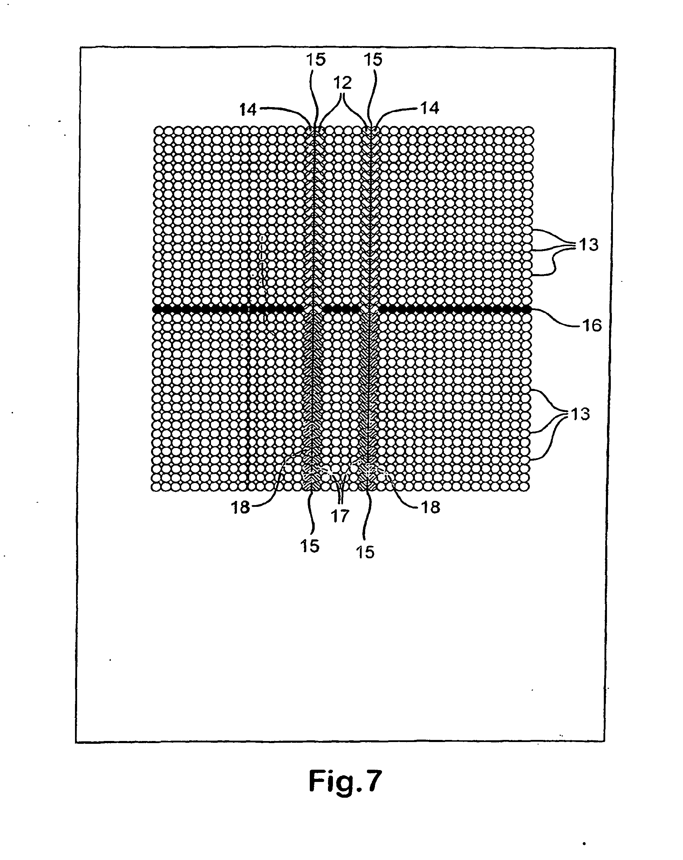

The indicator-apparatus may be modified to assist further with alignment of the aircraft for docking. The modification in this respect is confined to the LED array of the apparatus, and will now be described with reference to Figures 7 to 9.

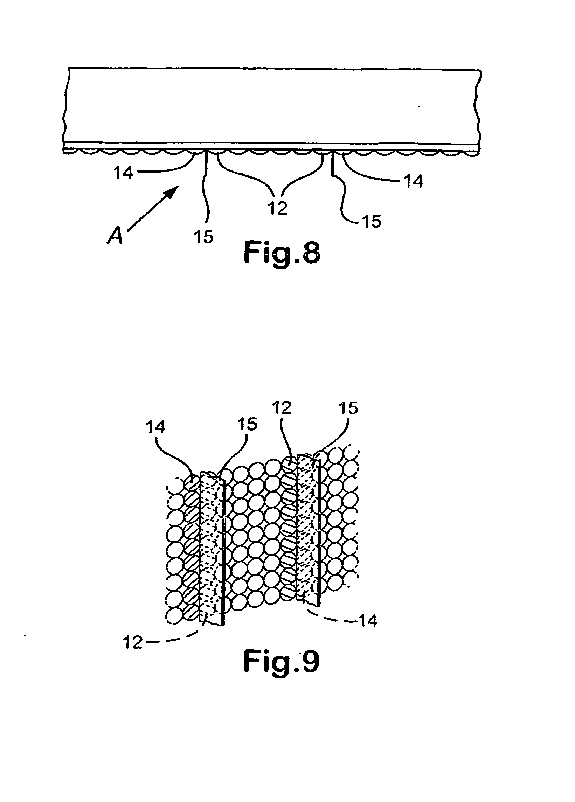

Referring to Figures 7 and 8, the modified LED array, like that of the apparatus 1 described above, includes two spaced columns 12 of green LEDs that extend vertically through horizontal rows 13 of amber LEDs, but the spacing between the columns 12 is larger. More particularly, the columns 12, rather than being spaced from one another in each row 13 by a single amber LED, are spaced from one another by four amber LEDs of the row. Also, each column 12 of green LEDs has an adjoining, vertical column 14 of red LEDs from which it is divided by a vertical forwardly-projecting baffle-screen 15 such that the two columns 12 lie immediately inside the two screens 15 and the two columns 14 immediately outside them.

The modified array is utilised in the same way as the array of the indicator-apparatus 1 in that one row 13 of amber LEDs is energised to provide a horizontal datum-bar 16, and the green LEDs of the columns 12 below the bar 16 are energised to provide vertical alignment-bars 17. However, in this case the red LEDs of the columns 14 below the bar 16 are also energised to provide vertical warning-bars 18 one or the other of which is visible to the pilot only when the aircraft has deviated to the left or right of the centre-line to the docking station.

While the aircraft is approaching the docking station on track, the two green bars 17 will be visible, but because of the baffle-screens 15, the red warning-bars 18 will be obscured from view unless there is deviation from the centre-line. If in this regard, the aircraft deviates to the left or right of the centre-line, the pilot's line of sight will be changed from straight-on to an angled direction as, for example, represented in exaggerated form for deviation to the left, by the arrow A in Figure 8. The consequence of this change for angular deviation to the left of 10 degrees or more from the centre-line, is that the red bar 18 of the left-hand column 14 is visible with the green bar 17 of the right-hand column 12, whereas the green bar 17 of the left-hand column 12 is obscured by the left-hand screen 15; the action of the left-hand screen 15 in obscuring the left-hand column 12 from direction A is illustrated in Figure 9.

The red bar 18 of the left-hand column 14 first becomes visible for deviation to the left of the centre-line of 6 degrees or more, whereas the green bar 17 of left-hand column 12 is not obscured completely by the left-hand screen 15 until the deviation reaches 10 degrees. Accordingly, for deviations to the left between 6 degrees and 10 degrees, the left-hand green and red bars 17 and 18 are visible together side-by-side along with the right-hand green bar 17.

The corresponding situation applies for deviations to the right of the centre-line, in that the right-hand red bar 18 becomes visible for deviations of 6 degrees or more to the right of the centre-line, and the right-hand green bar 17 is obscured by the right-hand screen 15 for deviations of 10 degrees or more.

## Claims

1. A method for affording guidance in bringing an aircraft or other vehicle to a defined position in a docking station, wherein a horizontal indicator (4) fixed relative to the docking station is viewed along an inclined line of sight from the vehicle against the background of a vertical array of a multiplicity of horizontal rows (9) of light sources spaced at a distance behind the horizontal indicator (4), the light sources being energised selectively by row to emit light that defines a horizontal datum (10) in the array, manoeuvre of the vehicle towards the docking station reducing visually the vertical separation between the horizontal indicator (4) and the horizontal datum (10) until they are visually aligned with one another when the vehicle is located in said defined position in the docking station.

2. A method according to Claim 1 wherein the array comprises vertical columns and horizontal rows of light sources, and wherein the light sources of a horizontal row of the array are energised to define the horizontal datum.

3. A method according to Claim 1 or Claim 2 wherein the horizontal indicator is defined by energised light sources.

4. A method according to Claim 2 or Claim 3 wherein the light sources are light-emitting diodes.

5. A method according to any one of Claims 1 to 4 wherein a vertical indicator is located with the horizontal indicator and the background includes a vertical datum, the method including viewing the vertical and horizontal indicators along the inclined line of sight against the vertical and horizontal datums of the background, manoeuvre of the vehicle towards and into an alignment with the docking station reducing visually both the vertical separation between the horizontal indicator and the horizontal datum as aforesaid, and the horizontal separation between the vertical indicator and the vertical datum.

6. A method according to Claim 5 wherein the vertical indicator is defined by energised light sources.

7. A method according to Claim 6 wherein the light sources of the vertical indicator are light-emitting diodes.

8. A method according to any one of Claims 5 to 7 wherein the array comprises an array of vertical columns and horizontal rows of light sources, and wherein at least some of the light sources of two spaced columns of the array are energised to define the vertical datum.

9. A method according to Claim 8 wherein the two columns lie within a pair of baffle-screens such that according to deviation of the vehicle to one side or the other out of the alignment with the docking station, one or other of the columns is obscured by the baffle-screens from view along the line of sight.

10. A method according to Claim 9 wherein two further columns of the array which lie outside the pair of baffle-screens are obscured by the baffle-screens from view along the line of sight while the vehicle is in said alignment with the docking station, and one or the other of the two further columns come into view along the line of sight in dependence upon the extent of deviation of the vehicle to the left or right respectively from that alignment.

11. Apparatus for affording guidance in bringing an aircraft or other vehicle to a defined position in a docking station, comprising a horizontal indicator (4) fixed relative to the docking station, a vertical array of a multiplicity of horizontal rows (9) of light sources which is spaced at a distance behind the horizontal indicator (4), and means for energising the light sources selectively by row to emit light that defines a horizontal datum (10) in the array such that when the horizontal indicator (4) is viewed along an inclined line of sight from the vehicle manoeuvre of the vehicle towards the docking station reduces visually the vertical separation between the horizontal indicator (4) and the horizontal datum (10) until they are visually aligned with one another when the vehicle is located in said defined position in the docking station.

12. Apparatus according to Claim 11 wherein the array comprises an array of vertical columns and horizontal rows of light sources, and wherein the apparatus includes means for selecting a row of the array, and means for energising the light sources of the selected row to define the horizontal datum.

13. Apparatus according to Claim 11 or Claim 12 wherein the horizontal indicator is defined by light sources.

14. Apparatus according to Claim 12 or Claim 13 wherein the light sources are light-emitting diodes.

15. Apparatus according to any one of claims 11 to 14 wherein a vertical indicator is located with the horizontal indicator and the array includes a vertical datum that is spaced at said distance behind the horizontal and vertical indicators such that when the vertical and horizontal indicators are viewed along the inclined line of sight against the vertical and horizontal datums, manoeuvre of the vehicle towards and in alignment with the docking station reduces visually both the vertical separation between the horizontal indicator and the horizontal datum as aforesaid, and the horizontal separation between the vertical indicator and the vertical datum.

16. Apparatus according to Claim 15 wherein the vertical indicator is defined by light sources.

17. Apparatus according to Claim 16 wherein the light sources of the vertical indicator are light-emitting diodes.

18. Apparatus according to any one of Claims 15 to 17 wherein the array comprises an array of vertical columns and horizontal rows of light sources, and wherein at least some of the light sources of two spaced columns of the array are energised to define the vertical datum.

19. Apparatus according to Claim 18 wherein the two columns lie within a pair of baffle-screens such that according to deviation of the vehicle to one side or the other out of the alignment with the docking station, one or other of the columns is obscured by the baffle-screens from view along the line of sight.

20. Apparatus according to claim 19 wherein two further columns of the array which lie outside the pair of baffle-screens are obscured by the baffle-screens from view along the line of sight while the vehicle is in said alignment with the docking station, and one or the other of the two further columns come into view along the line of sight in dependence upon the extent of deviation of the vehicle to the left or right respectively from that alignment.

## Patentansprüche

1. Verfahren zum Durchführen einer Führung, um ein Flugzeug oder ein anderes Fahrzeug an eine definierte Position in einer Andockstation zu bringen, wobei ein in Bezug auf die Andockstation fixierter horizontaler Indikator (4) entlang einer schrägen Sichtlinie aus dem Fahrzeug gegen den Hintergrund einer vertikalen Anordnung von mehreren horizontalen Reihen (9) von Lichtquellen, die in einem Abstand hinter dem horizontalen Indikator (4) angeordnet sind, betrachtet wird, die Lichtquellen selektiv zeilenweise elektrisch angesteuert werden, um Licht zu emittieren, das eine horizontale Bezugslinie (10) in der Anordnung definiert, und das auf die Andockstation gerichtete Manöver des Fahrzeugs sichtbar die vertikale Trennung zwischen dem horizontalen Indikator und der horizontalen Bezugslinie reduziert, bis sie sichtbar zueinander ausgerichtet sind, wenn sich das Fahrzeug in der definierten Position in der Andockstation befindet.

2. Verfahren nach Anspruch 1, wobei die Anordnung vertikale Spalten und horizontale Zeilen mit Lichtquellen aufweist, und wobei die Lichtquellen einer horizontalen Zeile der Anordnung angesteuert werden, um die horizontale Bezugslinie zu definieren.

3. Verfahren nach Anspruch 1 oder 2, wobei der horizontale Indikator durch angesteuerte Lichtquellen definiert ist.

4. Verfahren nach Anspruch 2 oder 3, wobei die Lichtquellen Licht emittierende Dioden sind.

5. Verfahren nach einem der Ansprüche 1 bis 4, wobei ein vertikaler Indikator mit dem horizontalen Indikator angeordnet ist und der Hintergrund eine vertikale Bezugslinie enthält, das Verfahren die Betrachtung der vertikalen und horizontalen Indikatoren entlang der schrägen Sichtlinie gegen die vertikalen und horizontalen Bezugslinien des Hintergrundes beinhaltet, und das Manöver des Fahrzeugs zu und in eine Ausrichtung zu der Andockstation sichtbar sowohl die vertikale Trennung zwischen dem horizontalen Indikator und der horizontalen Bezugslinie wie vorstehend erwähnt, als auch die horizontale Trennung zwischen dem vertikalen Indikator und der vertikalen Bezugslinie reduziert.

6. Verfahren nach Anspruch 5, wobei der vertikale Indikator durch angesteuerte Lichtquellen definiert ist.

7. Verfahren nach Anspruch 6, wobei die Lichtquellen des vertikalen Indikators Licht emittierende Dioden sind.

8. Verfahren nach einem der Ansprüche 5 bis 7, wobei die Anordnung eine Anordnung vertikaler Spalten und horizontaler Reihen mit Lichtquellen aufweist, und wobei wenigstens einige von den Lichtquellen von zwei beabstandeten Spalten der Anordnung angesteuert werden, um die vertikale Bezugslinie zu definieren.

9. Verfahren nach Anspruch 8, wobei die zwei Spalten innerhalb eines Paares von Abgrenzungsschirmen so liegen, dass abhängig von der Abweichung des Fahrzeugs zu einer Seite oder zur anderen Seite von der Ausrichtung zu der Andockstation, die eine oder andere von den Spalten durch die Abgrenzungsschirme der Sicht entlang der Sichtlinie verdeckt wird.

10. Verfahren nach Anspruch 9, wobei zwei weitere Spalten der Anordnung, welche außerhalb des Paares der Abgrenzungsschirme liegen, durch die Abgrenzungsschirme der Sicht entlang der Sichtlinie verdeckt werden, während sich das Fahrzeug in der Ausrichtung zu der Andockstation befindet, und die eine oder die andere von den zwei weiteren Spalten in die Sicht entlang der Sichtlinie in Abhängigkeit von dem Ausmaß der Abweichung des Fahrzeugs nach links bzw. rechts von dieser Ausrichtung kommt.

11. Vorrichtung zum Durchführen einer Führung, um ein Flugzeug oder ein anderes Fahrzeug an eine definierte Position in einer Andockstation zu bringen, die einen in Bezug auf die Andockstation fixierten horizontalen Indikator (4), eine vertikale Anordnung von mehreren horizontalen Reihen (9) mit Lichtquellen, die in einem Abstand hinter dem horizontalen Indikator (4) angeordnet sind, und eine Einrichtung zum selektiven zeilenweisen Ansteuern der Lichtquellen aufweist, um Licht zu emittieren, das eine horizontale Bezugslinie (10) in der Anordnung definiert, so dass, wenn der horizontale Indikator (4) entlang einer schrägen Sichtlinie aus dem Fahrzeug betrachtet wird, das auf die Andockstation gerichtete Manöver des Fahrzeugs sichtbar die vertikale Trennung zwischen dem horizontalen Indikator (4) und der horizontalen Bezugslinie (10) reduziert, bis sie sichtbar zueinander ausgerichtet sind, wenn sich das Fahrzeug in der definierten Position in der Andockstation befindet.

12. Vorrichtung nach Anspruch 11, wobei die Anordnung eine Anordnung vertikaler Spalten und horizontaler Zeilen mit Lichtquellen aufweist, und wobei die Vorrichtung eine Einrichtung enthält, um eine Reihe der Anordnung auszuwählen, und eine Einrichtung, um die Lichtquellen der ausgewählten Reihe anzusteuern, um die horizontale Bezugslinie zu definieren.

13. Vorrichtung nach Anspruch 11 oder 12, wobei der horizontale Indikator durch Lichtquellen definiert ist.

14. Vorrichtung nach Anspruch 12 oder 13, wobei die Lichtquellen Licht emittierende Dioden sind.

15. Vorrichtung nach einem der Ansprüche 11 bis 14, wobei ein vertikaler Indikator mit dem horizontalen Indikator angeordnet ist und die Anordnung eine vertikale Bezugslinie enthält, die in dem Abstand hinter den horizontalen und vertikalen Indikatoren so angeordnet ist, dass, wenn die vertikalen und horizontalen Indikatoren entlang der schrägen Sichtlinie gegen die vertikalen und horizontalen Bezugslinien des Hintergrundes betrachtet werden, das Manöver des Fahrzeugs zu und in eine Ausrichtung zu der Andockstation sichtbar sowohl die vertikale Trennung zwischen dem horizontalen Indikator und der horizontalen Bezugslinie wie vorstehend erwähnt, als auch die horizontale Trennung zwischen dem vertikalen Indikator und der vertikalen Bezugslinie reduziert.

16. Vorrichtung nach Anspruch 15, wobei der vertikale Indikator durch Lichtquellen definiert ist.

17. Vorrichtung nach Anspruch 16, wobei die Lichtquellen des vertikalen Indikators Licht emittierende Dioden sind.

18. Vorrichtung nach einem der Ansprüche 15 bis 17, wobei die Anordnung eine Anordnung vertikaler Spalten und horizontaler Zeilen mit Lichtquellen aufweist, und wobei wenigstens einige von den Lichtquellen von zwei beabstandeten Spalten der Anordnung angesteuert werden, um die vertikale Bezugslinie zu definieren.

19. Vorrichtung nach Anspruch 18, wobei die zwei Spalten innerhalb eines Paares von Abgrenzungsschirmen so liegen, dass abhängig von der Abweichung des Fahrzeugs zu einer Seite oder zur anderen Seite von der Ausrichtung zu der Andockstation, die eine oder andere von den Spalten durch die Abgrenzungsschirme der Sicht entlang der Sichtlinie verdeckt wird.

20. Vorrichtung nach Anspruch 19, wobei zwei weitere Spalten der Anordnung, welche außerhalb des Paares der Abgrenzungsschirme liegen, durch die Abgrenzungsschirme der Sicht entlang der Sichtlinie verdeckt werden, während sich das Fahrzeug in der Ausrichtung zu der Andockstation befindet, und die eine oder die andere von den zwei weiteren Spalten in die Sicht entlang der Sichtlinie in Abhängigkeit von dem Ausmaß der Abweichung des Fahrzeugs nach links bzw. rechts von dieser Ausrichtung kommt.

## Revendications

1. Procédé pour permettre un guidage pour amener un aéronef ou un autre véhicule à une position définie dans un poste de stationnement, dans lequel un indicateur horizontal (4) fixe par rapport au poste de stationnement est vu le long d'un axe de visée incliné depuis le véhicule contre l'arrière-plan d'un réseau vertical d'une multiplicité de rangées horizontales (9) de sources de lumière espacées d'une distance derrière l'indicateur horizontal (4), les sources de lumière étant activées sélectivement par rangée pour émettre une lumière qui définit une donnée horizontale (10) dans le réseau, la manoeuvre du véhicule vers le poste de stationnement réduisant visuellement la séparation verticale entre l'indicateur horizontal (4) et la donnée horizontale (10) jusqu'à ce qu'ils soient alignés visuellement l'un avec l'autre lorsque le véhicule est positionné dans ladite position définie dans le poste de stationnement.

2. Procédé selon la revendication 1, dans lequel le réseau comporte des colonnes verticales et des rangées horizontales de sources de lumière, et dans lequel les sources de lumière d'une rangée horizontale du réseau sont activées pour définir la donnée horizontale.

3. Procédé selon la revendication 1 ou 2, dans lequel l'indicateur horizontal est défini par des sources de lumière activées.

4. Procédé selon la revendication 2 ou 3, dans lesquelles les sources de lumière sont des diodes électroluminescentes.

5. Procédé selon l'une quelconque des revendications 1 à 4, dans lequel un indicateur vertical est positionné avec l'indicateur horizontal, et l'arrière-plan comprend une donnée verticale, le procédé comportant la visualisation des indicateurs vertical et horizontal le long de l'axe de visée incliné par rapport aux données verticale et horizontale de l'arrière-plan, une manoeuvre du véhicule vers le poste de stationnement, et en alignement avec celui-ci, réduisant visuellement la séparation verticale entre l'indicateur horizontal et la donnée horizontale mentionnée ci-dessus, et la séparation horizontale entre l'indicateur vertical et la donnée verticale.

6. Procédé selon la revendication 5, dans lequel l'indicateur vertical est défini par des sources de lumière activées.

7. Procédé selon la revendication 6, dans lequel les sources de lumière de l'indicateur vertical sont des diodes électroluminescentes.

8. Procédé selon l'une quelconque des revendications 5 à 7, dans lequel le réseau comporte un réseau de colonnes verticales et de rangées horizontales de sources de lumière, et dans lequel au moins certaines des sources de lumière de deux colonnes espacées du réseau sont activées pour définir la donnée verticale.

9. Procédé selon la revendication 8, dans lequel les deux colonnes s'étendent dans une paire d'écrans déflecteurs de telle sorte que selon l'écart du véhicule d'un côté ou de l'autre hors de l'alignement avec le poste de stationnement, l'une ou l'autre des colonnes est cachée par les écrans déflecteurs à la vue le long de l'axe de visée.

10. Procédé selon la revendication 9, dans lequel deux colonnes supplémentaires du réseau qui s'étendent à l'extérieur de la paire d'écrans déflecteurs sont cachées à la vue par les écrans déflecteurs le long de l'axe de visée tandis que le véhicule est dans ledit alignement avec le poste de stationnement, et l'une ou l'autre des deux colonnes supplémentaires vient en vue le long de l'axe de visée en fonction de l'étendue de l'écart du véhicule vers la gauche ou la droite, respectivement, par rapport à cet alignement.

11. Appareil pour permettre un guidage pour amener un aéronef ou un autre véhicule à une position définie dans un poste de stationnement, comportant un indicateur horizontal (4) fixe par rapport au poste de stationnement, un réseau vertical constitué d'une multiplicité de rangées horizontales (9) de sources de lumière qui sont espacées d'une distance derrière l'indicateur horizontal (4), et de moyens pour activer les sources de lumière sélectivement par rangée pour émettre une lumière qui définit une donnée horizontale (10) dans le réseau de telle sorte que lorsque l'indicateur horizontal (4) est vu le long d'un axe de visée incliné depuis le véhicule, une manoeuvre du véhicule vers le poste de stationnement réduit visuellement la séparation verticale entre l'indicateur horizontal (4) et la donnée horizontale (10) jusqu'à ce qu'ils soient alignés visuellement l'un avec l'autre lorsque le véhicule est positionné dans ladite position définie dans le poste de stationnement.

12. Appareil selon la revendication 11, dans lequel le réseau comporte un réseau de colonnes verticales et de rangées horizontales de sources de lumière, et dans lequel l'appareil comporte des moyens pour sélectionner une rangée du réseau, et des moyens pour activer les sources de lumière de la rangée sélectionnée pour définir la donnée horizontale.

13. Appareil selon la revendication 11 ou 12, dans lequel l'indicateur horizontal est défini par des sources de lumière.

14. Appareil selon de revendication 12 ou 13, dans lequel les sources de lumière sont des diodes électroluminescentes.

15. Appareil selon l'une quelconque des revendications 11 à 14, dans lequel un indicateur vertical est positionné avec l'indicateur horizontal, et le réseau comporte une donnée verticale qui est espacée à ladite distance derrière les indicateurs horizontal et vertical de telle sorte que lorsque les indicateurs vertical et horizontal sont vus le long de l'axe de visée incliné à l'encontre des données verticale et horizontale, une manoeuvre du véhicule vers le poste de stationnement, et en alignement avec celui-ci, réduit visuellement la séparation verticale entre l'indicateur horizontal et la donnée horizontale mentionnée ci-dessus, et la séparation horizontale entre l'indicateur vertical et la donnée verticale.

16. Appareil selon la revendication 15, dans lequel l'indicateur vertical est défini par des sources de lumière.

17. Appareil selon la revendication 16, dans lequel les sources de lumière de l'indicateur vertical sont des diodes électroluminescentes.

18. Appareil selon l'une quelconque des revendications 15 à 17, dans lequel le réseau comporte un réseau de colonnes verticales et de rangées horizontales de sources de lumière, et dans lequel au moins certaines des sources de lumière de deux colonnes espacées du réseau sont activées pour définir la donnée verticale.

19. Appareil selon la revendication 18, dans lequel les deux colonnes s'étendent dans une paire d'écrans déflecteurs de telle sorte que selon l'écart du véhicule d'un côté ou de l'autre hors de l'alignement avec le poste de stationnement, l'une ou l'autre des colonnes est cachée par les écrans déflecteurs à la vue le long de l'axe de visée.

20. Appareil selon la revendication 19, dans lequel deux colonnes supplémentaires du réseau qui s'étendent à l'extérieur de la paire d'écrans déflecteurs sont cachées par les écrans déflecteurs à la vue le long de l'axe de visée, tandis que le véhicule est dans ledit alignement avec le poste de stationnement, et l'une ou l'autre des deux colonnes supplémentaires vient en vue le long de l'axe de visée en fonction de l'étendue d'écart du véhicule vers la gauche ou la droite, respectivement, par rapport à cet alignement.
